# EUROPEAN PATENT SPECIFICATION

(11) **EP 4 443 252 B1**
(45) Date of publication and mention of the grant of the patent: **24.06.2026**
(21) Application number: 24167372.2
(22) Date of filing: 28.03.2024
(51) Int. Cl.: G05B 19/409, G05B 19/418

(54) **SETUP PROCEDURE FOR SIMULTANEOUSLY CONFIGURING A PLURALITY OF ELECTRONICALLY CONTROLLED YARN FEEDERS IN A TEXTILE PROCESS**
AUFBAUVERFAHREN ZUR GLEICHZEITIGEN KONFIGURATION EINER VIELZAHL VON ELEKTRONISCH GESTEUERTEN GARNLIEFERVORRICHTUNGEN IN EINEM TEXTILVERFAHREN
PROCÉDÉ DE CONFIGURATION POUR LA CONFIGURATION SIMULTANÉE D'UNE PLURALITÉ DE FOURNISSEURS DE FIL À COMMANDE ÉLECTRONIQUE DANS UN PROCESSUS TEXTILE

(30) Priority: 06.04.2023 IT 202300006780
(43) Date of publication of application: 09.10.2024
(73) Proprietor: L.G.L. Electronics S.p.A., 24024 Gandino (Bergamo) (IT)
(72) Inventor: GOTTI, Luca, 24021 Albino BG (IT); LANFRANCHI, Francesco, 24024 Gandino BG (IT)
(74) Representative: Modiano, Micaela Nadia

(56) References cited:
- EP-A1- 3 098 340
- EP-A1- 3 293 595
- EP-A1- 3 699 343
- WO-A1-2017/115242
- US-A1- 2019 177 108

## Description

The present invention relates to a setup procedure for simultaneously configuring a plurality of electronically controlled yarn feeders in a textile process.

A particularly advantageous, but not exclusive, application of the invention is in warping processes.

As is known, in a generic warping process, a warper is fed by a plurality of yarns which is unwound from respective spools.

In more modern warping processes, an electronically controlled yarn feeder is interposed between each spool and the warper, and is adapted to keep under control the speed and/or the tension with which the yarn is fed to the warper.

The yarn feeders can all be connected to a bus, typically a CAN-bus, which is connected to the warper by way of a gateway. The function of the gateway is to encode the messages exchanged between the warper and the yarn feeders.

As is known, one of the signals that can be supplied by the warper is a status signal indicating whether the warper is in motion, and therefore is picking up yarn, or when it is at rest, and therefore is not picking up yarn. The status signal can be a simple binary signal or a signal deriving from a position/speed signal generated by the warper.

In a way that is per se known, the status signal supplied by the warper can be used by the yarn feeders to recognize possible operational anomalies. In particular, the yarn feeders can implement a monitoring function by virtue of which they monitor the unwinding of their yarn and, if they detect no yarn being unwound even though the status signal indicates that the warper is in motion, they send an alarm message on the bus which is converted by the gateway to a stop command, which causes the warper to be stopped. EP 3 098 340 A1 and EP 3 699 343 A1 disclose monitoring systems in which a textile machine is stopped upon reception of a stop signal from the yarn feeders.

Usually, the unwinding of yarn is monitored by sensor means, which the yarn feeder is already fitted with for other purposes.

For example, with "positive" yarn feeders, in which the yarn is wound on a motorized rotating spool, it is known to use the Hall sensors with which the motor is usually equipped to control the rotation speed of the spool, on which the yarn unwinding rate depends.

With "accumulator" yarn feeders, in which the yarn is wound on a fixed drum from which the warper unwinds the yarn, it is known to use an unwinding sensor which, usually, monitors the drum in order to calculate the speed with which the yarn is unwound from the drum.

In both cases, therefore, it is possible to determine a yarn unwinding rate below which it can be assumed that the yarn is not being picked up.

As is known, during a warping process, the warper does not necessarily use all the available yarns, and so some yarn feeders may remain inactive.

For example in "sectional" warpers, the warp is formed using, in the various steps of the warping process, only some sections of the total of the available yarns.

Before starting the warping process it is necessary to disable the monitoring function on those yarn feeders that will not be used in the process, in order to prevent them from transmitting the alarm message that would cause the unwarranted stopping of the warper.

Since, usually, warpers are not capable of communicating which yarn feeders are involved in the warping process, disabling the monitoring function needs to be done manually by the user.

Unfortunately, considering the high number of yarn feeders normally associated with a warper (usually several hundred yarn feeders), this operation has the drawback of requiring a great deal of time and of being highly susceptible to human error.

Therefore, the aim of the present invention is to provide a setup procedure that makes it possible to identify, in a few seconds, which yarn feeders are not involved in a weaving process and to simultaneously disable the monitoring function on all these yarn feeders, and all without requiring any modification to the textile machine.

The above aim and other objects, which will become clearer from the description that follows, are achieved by the setup procedure having the characteristics recited in the appended claim 1, while the appended dependent claims define other characteristics of the invention which are advantageous, although secondary.

Now the invention will be described in greater detail, with reference to a preferred but not exclusive embodiment thereof, which is illustrated by way of non-limiting example in the accompanying drawings, wherein:
- Figure 1 is a block diagram that schematically illustrates a warping process in which a setup procedure according to the invention can be implemented;
- Figure 2 is a flowchart that describes the setup procedure according to a preferred embodiment of the invention.

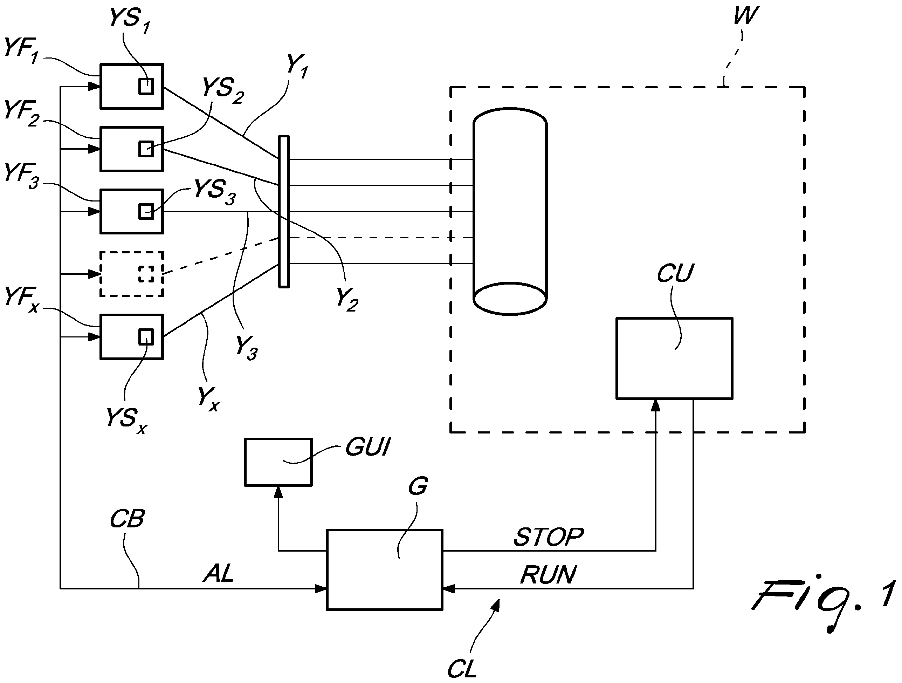

With reference to Figure 1, a warper W is fed by a plurality of yarns Y₁, Y₂, Y₃, ..., Y_{X} unreeled from respective electronically controlled yarn feeders YF₁, YF₂, YF₃, ..., YF_{X}.

Each one of the yarn feeders YF₁, YF₂, YF₃, ..., YF_{X} can be of the "positive" type or the "accumulator" type.

For a positive yarn feeder fitted with a motorized spool on which the yarn is wound, a tension sensor can conventionally be provided downstream of the spool, which, when the warper W starts picking up yarn, detects the increase in the yarn tension and generates a signal that activates the rotation of the spool.

For an accumulator yarn feeder, instead, the warper W picks up the yarn directly from a drum which holds a plurality of turns wound thereon; as the drum is emptied, new turns are wound thereon either by a motorized flywheel or by rotating the drum.

In both cases, therefore, the yarn feeder can be configured to automatically pay out yarn in response to demand from the warper W, without receiving a specific command from the latter.

The yarn feeders YF₁, YF₂, YF₃, ..., YF_{X} are all connected on a bus, advantageously a CAN-bus CB, which is in turn connected to a gateway G.

The warper W is provided with a control unit CU which is connected to the gateway G over a bidirectional communication line CL.

The gateway G is conventionally programmed to convert signals arriving from the control unit CU of the warper W, over the communication line CL, to corresponding signals for the yarn feeders YF₁, YF₂, YF₃, ..., YF_{X} on the CAN-bus CB, and vice versa.

The gateway G is advantageously provided with a graphical user interface GUI.

In a per se known way, the warper W transmits a status signal RUN to the gateway G, over the communication line CL, indicating whether it is in motion, and therefore is picking up yarn, or it is at rest, and therefore is not picking up yarn. As an example, the status signal RUN can be a binary signal or a signal deriving from a position/speed signal generated by the warper W. In any case, the status signal RUN only supplies a basic item of information, i.e. the fact that the warper is in motion or it is at rest, without distinguishing which yarns it is actually picking up.

The status signal RUN is encoded by the gateway G and transmitted to the yarn feeders YF₁, YF₂, YF₃, ..., YF_{X} by way of the CAN-bus CB.

Also in a per se known way, each one of the yarn feeders YF₁, YF₂, YF₃, ..., YF_{X} implements a monitoring function, with which it monitors the unwinding of the yarn Y₁, Y₂, Y₃, ..., Y_{X} associated with it by means of respective sensor means YS₁, YS₂, YS₃, ..., YS_{X} and, if it detects that there is no unwinding of yarn even though the status signal RUN indicates that the warper W is picking up yarn, it generates an alarm message AL which is converted by the gateway G to a stop signal STOP for the warper W.

In a per se known way, in positive yarn feeders the unwinding of the yarn can be advantageously monitored using the Hall sensors that the motor that drives the spool is normally provided with.

In accumulator yarn feeders, the unwinding of the yarn can be advantageously monitored by using an unwinding sensor which usually monitors the drum in order to calculate the rate at which the yarn is unwound.

As an alternative, the unwinding of yarn can be obviously monitored by means of a dedicated sensor.

Also in a per se known way, the monitoring function can be disabled by the gateway G on those yarn feeders that are not used in a specific warping process, in order to prevent them from generating the alarm message AL, causing the unwarranted stopping of the warper W.

According to the invention, before starting a warping process, a setup procedure is executed through the gateway G, which is adapted to identify the yarn feeders that are not involved in the warping process and to disable the monitoring function on all of them. This setup procedure comprises at least the following steps of:
- enabling, with the warper W at rest, the monitoring function by means of the gateway G on all the yarn feeders YF₁, YF₂, YF₃, ..., YF_{X} associated with the warper W;
- starting the warper W for a pre-established setup cycle, during which the stopping of the warper W is inhibited, such setup cycle having a duration longer than the maximum time required by each one of the yarn feeders YF₁, YF₂, YF₃, ..., YF_{X} to detect the unwinding of yarn;
- selecting, at the end of the setup cycle, the yarn feeders on which the monitoring function is to be disabled based on those that have sent an alarm signal AL during the setup cycle, and disabling the monitoring function on all the selected yarn feeders by means of the gateway G.

As the person skilled in the art will be able to appreciate, with the setup procedure described above, the disabling of the monitoring function can be advantageously executed simultaneously on all the selected yarn feeders.

In a preferred embodiment of the invention, in order to inhibit the stopping of the warper W, during the setup cycle the sending of the stop message STOP is inhibited by the gateway G; at the end of the setup cycle, if at least one of the yarn feeders YF₁, YF₂, YF₃, ..., YF_{X} has sent an alarm signal AL, the gateway G sends the stop signal STOP to the textile machine W.

In this case, the duration of the setup cycle is a dedicated parameter that can be programmed by the user, and will need to be chosen considering, out of all the yarn feeders associated with the warper W, the feeder that takes the longest time to detect the unwinding of yarn. The duration of the setup cycle can be generally a few seconds (e.g., 6-7 seconds) but can vary according to types and models of yarn feeders involved in the process.

In a more basic embodiment of the invention, at the end of the setup cycle the gateway G could directly disable the monitoring function on all the feeders that have sent the alarm signal AL.

However, in a preferred embodiment of the invention, in order to select the yarn feeders on which to disable the monitoring function, the gateway G generates a warning in which it lists the yarn feeders that have sent the alarm signal AL and asks for confirmation that the monitoring function on these is to be disabled, e.g., with a message as follows:
"Yarn feeders 1, 6, 9, ... are not selected in the warping process in progress. Disable them?",
executing the disabling only after receiving confirmation from a user.

This makes it possible to highlight any operational anomalies that arise during the setup procedure. For example, if an alarm signal AL were to be sent by one of the yarn feeders that should be involved in the warping process, the user can then check if that yarn feeder has problems.

Advantageously, the setup procedure can be managed by the graphical user interface GUI. For example, by means of the graphical user interface GUI the user can view messages, such as the confirmation prompt mentioned above, and/or set parameters, such as the duration of the setup cycle, and/or send commands such as the command to confirm disabling of the monitoring function on some yarn feeders.

Alternatively, the setup procedure can be managed remotely.

In a preferred embodiment of the invention, the yarn feeders on which the monitoring function is disabled remain active, even though they will not pay out yarn during the warping process since they will detect no demand from the warper W.

In an alternative embodiment of the invention, the electric power supply to the yarn feeders on which the monitoring function is disabled is maintained, so that they can be reactivated by the gateway G or remotely, but the feeders are placed in a stand-by state in which all other functions are disabled. In this case, therefore, the yarn feeder would not be capable of responding to demands for yarn from the warper W during the warping process, but in any case it will not receive such requests because it is not included.

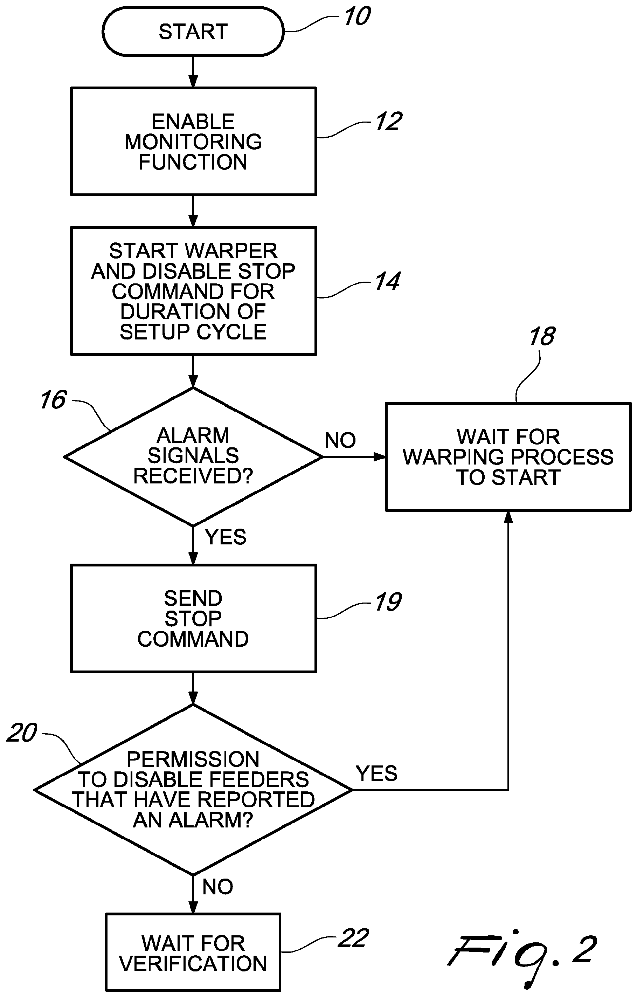

Figure 2 shows the steps of the setup procedure according to the invention in the form of a flowchart.

The setup procedure starts in block 10, with the warper W at rest.

In block 12, the gateway G enables the monitoring function on all the yarn feeders YF₁, YF₂, YF₃, ..., YF_{X} associated with the warper W.

In block 14, the gateway G commands the warper W to start for the setup cycle and, at the same time, disables sending the stop command STOP to the warper W if alarm signals AL are received.

At the end of the setup cycle, in block 16 the gateway G checks to see if it has received alarm signals AL.

If not (no alarm message AL received), in block 18 the gateway G waits for the warping process to start.

If so (one or more alarm messages AL received), in block 19 the gateway G sends the stop command STOP to the warper W and in block 20 it asks for permission to disable the monitoring function on the yarn feeders that sent the alarm messages.

If so (permission to disable the monitoring function granted), the procedure resumes from block 18.

If not (permission to disable the monitoring function denied), in block 22 the gateway G awaits verification by the user.

As the person skilled in the art will be able to appreciate, the setup procedure according to the invention fully achieves the set aims, in that it makes it possible to identify, in a few seconds, which yarn feeders are not involved in a weaving process and to simultaneously disable the monitoring function on those yarn feeders, and all without requiring any modification to the textile machine.

In an alternative embodiment of the invention, the duration of the setup cycle can be determined by a programmed stop of the textile machine. For example, this embodiment can be advantageously implemented in cases where the textile machine is programmed to execute, before the processing, a threading cycle at the end of which it stops automatically. If the duration of the threading cycle is sufficient to detect the unwinding of yarn on each one of the yarn feeders, the setup cycle can be integrated in the threading cycle executed by the textile machine. In particular, the gateway will learn from the status signal when the threading cycle has reached its end, and as a consequence will interrupt the setup cycle as well.

Some preferred embodiments of the invention have been described herein, but obviously the person skilled in the art may make various modifications and variations within the scope of protection of the claims.

In particular, the steps of the setup procedure after the stop command is sent (block 19 in Figure 2) may vary based on the preferences of the user. For example, as previously mentioned, in a variation of the invention the gateway could disable the monitoring function on all the feeders that sent the alarm signal, without asking the user for permission (block 20 in Figure 2). On the other hand, if the gateway does ask for permission and the user does not give it within a preset time, or expressly denies it (e.g., by sending a specific command), the setup procedure could be interrupted instead of remaining on standby while awaiting verification (block 22 in Figure 2).

Furthermore, although the present description refers in particular to warping processes, obviously the invention can equally be applied to any other textile process that involves a textile machine fed by a plurality of yarn feeders, e.g., knitting processes using circular knitting machines and the like.

Obviously, although in Figure 1 the gateway and the associated graphical user interface are illustrated as self-contained devices, obviously the gateway could be integrated in the textile machine and, as a consequence, the graphical user interface could be incorporated in a control panel of the textile machine.

Furthermore, although at the end of the setup procedure the monitoring function can be advantageously disabled simultaneously on all the selected yarn feeders, as an alternative it can be disabled in sequence on all the selected yarn feeders or on successive groups of yarn feeders in which that function is disabled simultaneously.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A setup procedure for configuring a plurality of electronically controlled yarn feeders (YF₁, YF₂, YF₃, ..., YF_{X}) in a textile process, said yarn feeders (YF₁, YF₂, YF₃, ..., YF_{X}) being configured to automatically release respective yarns (Y₁, Y₂, Y₃, ... , Y_{X}) in response to requests from a textile machine (W), said textile machine (W) transmitting to said yarn feeders (YF₁, YF₂, YF₃, ..., YF_{X}), via a gateway (G), a status signal (RUN) indicating whether or not it is picking up yarns, each one of said yarn feeders (YF₁, YF₂, YF₃, ..., YF_{X}) implementing a monitoring function, which can be disabled by said gateway (G) and by virtue of which it monitors the unwinding of its own yarn (Y₁, Y₂, Y₃, ..., Y_{X}) by means of respective sensor means (YS₁, YS₂, YS₃, ..., YS_{X}) and, if it detects that there is no unwinding of yarn even though said status signal (RUN) indicates that said textile machine (W) is picking up yarns, it generates an alarm message (AL) which is converted by said gateway (G) to a stop signal (STOP) for the textile machine (W),
said setup procedure being **characterized in that** it comprises at least the following steps of:
- enabling, with said textile machine (W) at rest, said monitoring function by means of said gateway (G) on all yarn feeders (YF₁, YF₂, YF₃, ..., YF_{X}) associated with said textile machine (W);
- starting said textile machine (W) for a setup cycle, during which the stopping of said textile machine (W) is inhibited, said setup cycle having a duration longer than the maximum time required by each one of said yarn feeders (YF₁, YF₂, YF₃, ..., YF_{X}) to detect the unwinding of yarn;
- selecting, at the end of said setup cycle, the yarn feeders on which the monitoring function is to be disabled based on those that have sent an alarm signal (AL) during the setup cycle, and disabling the monitoring function on all the selected yarn feeders by means of said gateway (G).

2. The setup procedure according to claim 1, **characterized in that** during said setup cycle the sending of said stop message (STOP) is inhibited by the gateway (G) and, at the end of said setup cycle, if at least one of the yarn feeders (YF₁, YF₂, YF₃, ..., YF_{X}) has sent an alarm signal (AL), said gateway (G) sends said stop signal (STOP) to said textile machine (W).

3. The setup procedure according to claim 1, **characterized in that** the duration of said setup cycle is a dedicated parameter that can be programmed by the user.

4. The setup procedure according to claim 1, **characterized in that** the duration of said setup cycle is determined by a programmed stop of said textile machine.

5. The setup procedure according to claim 1, **characterized in that**, in order to select the yarn feeders on which to disable the monitoring function, said gateway (G) generates a warning in which it lists the yarn feeders that have sent said alarm signal (AL) and asks for confirmation that the monitoring function on said yarn feeders that have sent said alarm is to be disabled, the disabling being performed only after receiving confirmation by a user.

6. The setup procedure according to claim 1, **characterized in that** at the end of said setup cycle said gateway (G) directly disables the monitoring function on all yarn feeders that have sent said alarm signal (AL).

7. The setup procedure according to claim 1, **characterized in that** the yarn feeders on which said monitoring function is disabled remain active.

8. The setup procedure according to claim 1, **characterized in that** the electric power supply to the yarn feeders on which said monitoring function is disabled is maintained, so that said yarn feeders can be reactivated, but said yarn feeders are placed in a stand-by state in which all other functions are disabled.

9. The setup procedure according to claim 1, **characterized in that** said textile machine is a warper (W).

10. The setup procedure according to claim 1, **characterized in that** said gateway (G) is integrated in said textile machine (W).

11. The setup procedure according to claim 1, **characterized in that** said gateway (G) is provided with a graphical user interface (GUI) for displaying messages and/or for setting parameters and/or for issuing commands by a user.

## Patentansprüche

1. Ein Aufbauverfahren zum Konfigurieren einer Vielzahl elektronisch gesteuerter Garnliefervorrichtungen (YF₁, YF₂, YF₃, ..., YF_{X}) in einem Textilverfahren, wobei die Garnliefervorrichtungen (YF₁, YF₂, YF₃, ..., YF_{X}) konfiguriert sind, um entsprechende Garne (YF₁, YF₂, YF₃, ..., YF_{X}) als Reaktion auf Anfragen von einer Textilmaschine (W) automatisch freizusetzen, wobei die Textilmaschine (W) über ein Gateway (G) ein Zustandssignal (RUN) an die Garnliefervorrichtungen (YF₁, YF₂, YF₃, ..., YF_{X}) sendet, welches anzeigt, ob sie Garne aufnimmt oder nicht, wobei jede der Garnliefervorrichtungen (YF₁, YF₂, YF₃, ..., YF_{X}) eine Überwachungsfunktion implementiert, die von dem Gateway (G) deaktiviert werden kann und mit der sie das Abwickeln ihres eigenen Garnes (YF₁, YF₂, YF₃, ..., YF_{X}) mit Hilfe jeweiliger Sensormittel (YS₁, YS₂, YS₃, ..., YS_{X}) überwacht und, falls sie erkennt, dass kein Garn abgewickelt wird, obwohl das Zustandssignal (RUN) anzeigt, dass die Textilmaschine (W) Garne aufnimmt, ein Alarmsignal (AL) erzeugt, welches von dem Gateway (G) in ein Stoppsignal (STOP) für die Textilmaschine (W) umgewandelt wird,
wobei das Aufbauverfahren **dadurch gekennzeichnet ist, dass** es mindestens folgende Schritte umfasst:
- das Aktivieren, mit der Textilmaschine (W) im Ruhezustand, der Überwachungsfunktion mit Hilfe des Gateways (G) an allen Garnliefervorrichtungen (YF₁, YF₂, YF₃, ..., YF_{X}), die mit der Textilmaschine (W) verknüpft sind;
- das Auswählen der Textilmaschine (W) für einen Aufbauzyklus, während dem das Anhalten der Textilmaschine (W) verhindert wird, wobei der Aufbauzyklus eine Dauer hat, die länger ist als die maximale Zeit, die von jeder der Garnliefervorrichtungen (YF₁, YF₂, YF₃, ..., YF_{X}) benötigt wird, um das Abwickeln von Garn zu erfassen;
- am Ende des Aufbauzyklus, das Auswählen der Garnliefervorrichtungen, an denen die Überwachungsfunktion deaktiviert werden soll, basierend auf denjenigen, die während des Aufbauzyklus ein Alarmsignal (AL) gesendet haben, und das Deaktivieren der Überwachungsfunktion an allen ausgewählten Garnliefervorrichtungen mit Hilfe des Gateways (G).

2. Das Aufbauverfahren gemäß Anspruch 1, **dadurch gekennzeichnet, dass** während des Aufbauzyklus das Senden des Stoppsignals (STOP) vom Gateway (G) verhindert wird und am Ende des Aufbauzyklus das Gateway (G) das Stoppsignal (STOP) an die Textilmaschine (W) sendet, wenn mindestens eine der Garnliefervorrichtungen (YF₁, YF₂, YF₃, ..., YF_{X}) ein Alarmsignal (AL) gesendet hat.

3. Das Aufbauverfahren gemäß Anspruch 1, **dadurch gekennzeichnet, dass** die Dauer des Aufbauzyklus ein spezifischer Parameter ist, der vom Benutzer programmiert werden kann.

4. Das Aufbauverfahren gemäß Anspruch 1, **dadurch gekennzeichnet, dass** die Dauer des Aufbauzyklus durch ein programmiertes Anhalten der Textilmaschine festgelegt wird.

5. Das Aufbauverfahren gemäß Anspruch 1, **dadurch gekennzeichnet, dass**, um die Garnliefervorrichtungen auszuwählen, bei denen die Überwachungsfunktion deaktiviert werden soll, das Gateway (G) eine Warnung erzeugt, in welcher es die Garnliefervorrichtungen auflistet, die das Alarmsignal (AL) gesendet haben, und eine Bestätigung anfordert, dass die Überwachungsfunktion bei den Garnliefervorrichtungen, die den Alarm gesendet haben, deaktiviert werden soll, wobei die Deaktivierung erst nach Empfang der Bestätigung eines Benutzers durchgeführt wird.

6. Das Aufbauverfahren gemäß Anspruch 1, **dadurch gekennzeichnet, dass** das Gateway (G) am Ende des Aufbauzyklus die Überwachungsfunktion bei allen Garnliefervorrichtungen, die das Alarmsignal (AL) gesendet haben, direkt deaktiviert.

7. Das Aufbauverfahren gemäß Anspruch 1, **dadurch gekennzeichnet, dass** die Garnliefervorrichtungen, bei denen die Überwachungsfunktion deaktiviert ist, aktiv bleiben.

8. Das Aufbauverfahren gemäß Anspruch 1, **dadurch gekennzeichnet, dass** die Stromversorgung aller Garnliefervorrichtungen, bei denen die Überwachungsfunktion deaktiviert ist, aufrechterhalten wird, so dass die Garnliefervorrichtungen reaktiviert werden können, jedoch die Garnliefervorrichtungen in einen Standby-Zustand versetzt werden, in dem alle anderen Funktionen deaktiviert sind.

9. Das Aufbauverfahren gemäß Anspruch 1, **dadurch gekennzeichnet, dass** die Textilmaschine eine Kettenschärmaschine (warper, W) ist.

10. Das Aufbauverfahren gemäß Anspruch 1, **dadurch gekennzeichnet, dass** das Gateway (G) in die Textilmaschine (W) integriert ist.

11. Das Aufbauverfahren gemäß Anspruch 1, **dadurch gekennzeichnet, dass** das Gateway (G) mit einer grafischen Benutzeroberfläche (graphical user interface, GUI) zum Anzeigen von Meldungen und/oder Einstellen von Parametern und/oder zum Ausgeben von Befehlen durch einen Benutzer ausgestattet ist.

## Revendications

1. Procédure de configuration pour configurer une pluralité de fournisseurs de fil à commande électronique (YF₁, YF₂, YF₃, ... , YF_{X}) dans un processus textile, lesdits fournisseurs de fil (YF₁, YF₂, YF₃, ..., YF_{X}) étant configurés pour délivrer automatiquement des fils respectifs (Y₁, Y₂, Y₃, ..., Yₓ) en réponse à des demandes provenant d'une machine textile (W), ladite machine textile (W) transmettant auxdits fournisseurs de fil (YF₁, YF₂, YF₃, ..., YF_{X}), via une passerelle (G), un signal d'état (RUN) indiquant si elle prélève ou non des fils, chacun desdits fournisseurs de fil (YF₁, YF₂, YF₃, ..., YF_{X}) mettant en œuvre une fonction de surveillance, qui peut être désactivée par ladite passerelle (G) et grâce à laquelle il surveille le déroulement de son propre fil (Y₁, Y₂, Y₃, ..., Yₓ) au moyen de moyens de capteurs respectifs (YS₁, YS₂, YS₃, ..., YS_{X}) et, s'il détecte qu'il n'y a pas de déroulement de fil même si ledit signal d'état (RUN) indique que ladite machine textile (W) est en train de prendre des fils, il génère un message d'alarme (AL) qui est converti par ladite passerelle (G) en un signal d'arrêt (STOP) pour la machine textile (W),
ladite procédure de configuration étant **caractérisée en ce qu'**elle comprend au moins les étapes suivantes :
- l'activation, alors que ladite machine textile (W) est à l'arrêt, de ladite fonction de surveillance au moyen de ladite passerelle (G) sur tous les fournisseurs de fil (YF₁, YF₂, YF₃, ..., YF_{X}) associés à ladite machine textile (W) ;
- le démarrage de ladite machine textile (W) pour un cycle de configuration, pendant lequel l'arrêt de ladite machine textile (W) est inhibé, ledit cycle de configuration ayant une durée supérieure au temps maximal requis par chacun desdits fournisseurs de fil (YF₁, YF₂, YF₃, ..., YF_{X}) pour détecter le déroulement de fil ;
- sélectionner, à la fin dudit cycle de configuration, les fournisseurs de fil sur lesquels la fonction de surveillance doit être désactivée en fonction de ceux qui ont envoyé un signal d'alarme (AL) pendant le cycle de configuration, et désactiver la fonction de surveillance sur tous les fournisseurs de fil sélectionnés au moyen de ladite passerelle (G).

2. Procédure de configuration selon la revendication 1, **caractérisée en ce que**, pendant ledit cycle de configuration, l'envoi dudit message d'arrêt (STOP) est inhibé par la passerelle (G) et, à la fin dudit cycle de configuration, si au moins l'un des fournisseurs de fil (YF₁, YF₂, YF₃, ..., YF_{X}) a envoyé un signal d'alarme (AL), ladite passerelle (G) envoie ledit signal d'arrêt (STOP) à ladite machine textile (W).

3. Procédure de configuration selon la revendication 1, **caractérisée en ce que** la durée dudit cycle de configuration est un paramètre dédié pouvant être programmé par l'utilisateur.

4. Procédure de configuration selon la revendication 1, **caractérisée en ce que** la durée dudit cycle de configuration est déterminée par un arrêt programmé de ladite machine textile.

5. Procédure de configuration selon la revendication 1, **caractérisée en ce que**, afin de sélectionner les fournisseurs de fil sur lesquels désactiver la fonction de surveillance, ladite passerelle (G) génère un avertissement dans lequel elle répertorie les fournisseurs de fil qui ont envoyé ledit signal d'alarme (AL) et demande confirmation que la fonction de surveillance sur lesdits fournisseurs de fil ayant envoyé ladite alarme doit être désactivée, la désactivation n'étant effectuée qu'après réception de la confirmation par un utilisateur.

6. Procédure de configuration selon la revendication 1, **caractérisée en ce qu'**à la fin dudit cycle de configuration, ladite passerelle (G) désactive directement la fonction de surveillance sur tous les fournisseurs de fil qui ont envoyé ledit signal d'alarme (AL).

7. Procédure de configuration selon la revendication 1, **caractérisée en ce que** les fournisseurs de fil sur lesquels ladite fonction de surveillance est désactivée restent actifs.

8. Procédure de configuration selon la revendication 1, **caractérisée en ce que** l'alimentation électrique des fournisseurs de fil sur lesquels ladite fonction de surveillance est désactivée est maintenue, de sorte que lesdits fournisseurs de fil peuvent être réactivés, mais lesdits fournisseurs de fil sont placés dans un état de veille dans lequel toutes les autres fonctions sont désactivées.

9. Procédure de configuration selon la revendication 1, **caractérisée en ce que** ladite machine textile est un ourdissoir (W).

10. Procédure de configuration selon la revendication 1, **caractérisée en ce que** ladite passerelle (G) est intégrée dans ladite machine textile (W).

11. Procédure de configuration selon la revendication 1, **caractérisée en ce que** ladite passerelle (G) est pourvue d'une interface utilisateur graphique (GUI) permettant l'affichage de messages et/ou le réglage de paramètres et/ou l'émission de commandes par un utilisateur.
